# EUROPEAN PATENT APPLICATION

(11) **EP 4 738 341 A1**
(43) Date of publication of application: **06.05.2026**
(21) Application number: 25208807.5
(22) Date of filing: 15.10.2025
(51) Int. Cl.: G10H 1/36, H04R 3/00

(54) **IN-VEHICLE PROCESSING OF VOCAL INPUTS**

(30) Priority: 29.10.2024 US 202418930842
(71) Applicant: Harman Becker Automotive Systems GmbH, 76307 Karlsbad (DE)
(72) Inventor: WILLIS, Maxwell B., 76307 Karlsbad (DE); WINTON, Riley, 76307 Karlsbad (DE); DAFTUAR, Rishi, 76307 Karlsbad (DE); TRESTAIN, Christopher, Michael, 76307 Karlsbad (DE)
(74) Representative: Westphal, Mussgnug & Partner, Patentanwälte mbB

(57) **Abstract**

Various embodiments disclose a computer-implemented method comprising causing playback of a first audio input an audio source by at least one speaker within a vehicle, detecting a second a first audio input using a microphone that is movable within the vehicle, modifying at least one audio property of the second first audio input to generate a modified second first audio input, and causing playback of the modified second first audio input by the at least one speaker within the vehicle.

## Description

### BACKGROUND

### Field of the Various Embodiments

The various embodiments relate generally to audio processing and, more specifically, to in-vehicle processing of vocal inputs.

### Description of the Related Art

Modern vehicles include in-vehicle infotainment (IVI) systems that receive audio and video inputs from various sources. The IVI system includes various output devices, such as displays and loudspeakers that are positioned throughout the vehicle. An IVI system obtains an audio source that is selected by a user from a local or remote source and plays back the audio source using an output device associated with the IVI system.

Karaoke experiences involve singing along with a prerecorded audio performance that is played back by an audio output device. A user sings along with the prerecorded audio performance and in some instances, a microphone is utilized to capture the singer's voice, which is reproduced using the same audio output device that plays back the prerecorded audio performance. Karaoke experiences can be provided in a vehicle using an audio source that includes the prerecorded audio performance as well as an audio input that includes the user's voice that is captured using an input device associated with the IVI system. In general, vehicles utilize microphones that are integrated into the vehicle interior. These built-in microphones are generally installed at fixed locations in the vehicle behind or within interior trim panels of the vehicle. An array of built-in microphones can also be utilized to capture audio inputs from users seated in various locations within a vehicle interior.

One drawback with utilizing conventional built-in microphones or microphone arrays in a vehicle is that utilizing the audio captured by these microphones for playback within the vehicle during a karaoke experience limits the quality and fidelity of the captured audio. In other words, the signal to noise ratio of the audio captured by conventional built-in microphones or microphone arrays is limited. By limiting the quality and fidelity of the captured audio, the ability to compress or apply effects to the captured audio input can lead to undesirable audio artifacts, such as acoustic feedback. Additionally, the distance between an occupant of a vehicle and a built-in microphone that is located behind or within an interior trim panel requires utilizing a relatively high microphone sensitivity to capture vocal input from the vehicle occupant. By utilizing a relatively high microphone sensitivity, the microphones often capture background noises other than the occupants voice, which can also cause acoustic feedback when the audio is played back on the vehicle loudspeakers.

As the foregoing illustrates, what is needed in the art are more effective techniques for capturing and processing vocal inputs that are captured by microphones within a vehicle and provided to an IVI system for playback within the vehicle.

### SUMMARY

In various embodiments, a computer-implemented method comprises causing playback of an audio source by at least one speaker within a vehicle, detecting an audio input using a microphone that is movable within the vehicle, modifying at least one audio property of the audio input to generate a modified audio input, and causing playback of the modified audio input by the at least one speaker within the vehicle.

At least one technical advantage of the disclosed techniques relative to the prior art is that, with the disclosed techniques, utilizing a movable microphone, such as a handheld microphone, to capture vocal or audio inputs within the vehicle improves the quality and fidelity of the audio captured within a vehicle's interior cabin. Additionally, a lower microphone sensitivity can be utilized relative to implementations relying on immovable or built-in microphones, which reduces the amount of background noise captured by the movable microphone, improves the quality of processing steps taken to compress or add effects to the audio, and/or reduces acoustic feedback. Finally, the disclosed techniques support personalization of a karaoke experience provided by the IVI system based on the seating location of the occupant. These technical advantages provide one or more technological advancements over prior art approaches.

### BRIEF DESCRIPTION OF THE DRAWINGS

So that the manner in which the above recited features of the various embodiments can be understood in detail, a more particular description of the inventive concepts, briefly summarized above, can be had by reference to various embodiments, some of which are illustrated in the appended drawings. It is to be noted, however, that the appended drawings illustrate only typical embodiments of the inventive concepts and are therefore not to be considered limiting of scope in any way, and that there are other equally effective embodiments.
Figure 1 illustrates a block diagram of an audio playback system configured to implement one or more aspects of the present disclosure.
Figure 2 illustrates a block diagram of an IVI system configured to implement one or more aspects of the present disclosure.
Figure 3 illustrates an example vehicle system that includes the IVI system of Figure 1, according to various embodiments.
Figure 4 is a flow diagram of method steps for generating an audio output based upon an audio input captured by the IVI system, according to various embodiments.
Figure 5 is a flow diagram of method steps for generating a location-specific audio output based upon an audio input captured by the IVI system, according to various embodiments.

### DETAILED DESCRIPTION

In the following description, numerous specific details are set forth to provide a more thorough understanding of the various embodiments. However, it will be apparent to one skilled in the art that the inventive concepts can be practiced without one or more of these specific details. For explanatory purposes, multiple instances of like objects are symbolized with reference numbers identifying the object and parenthetical numbers(s) identifying the instance where needed.

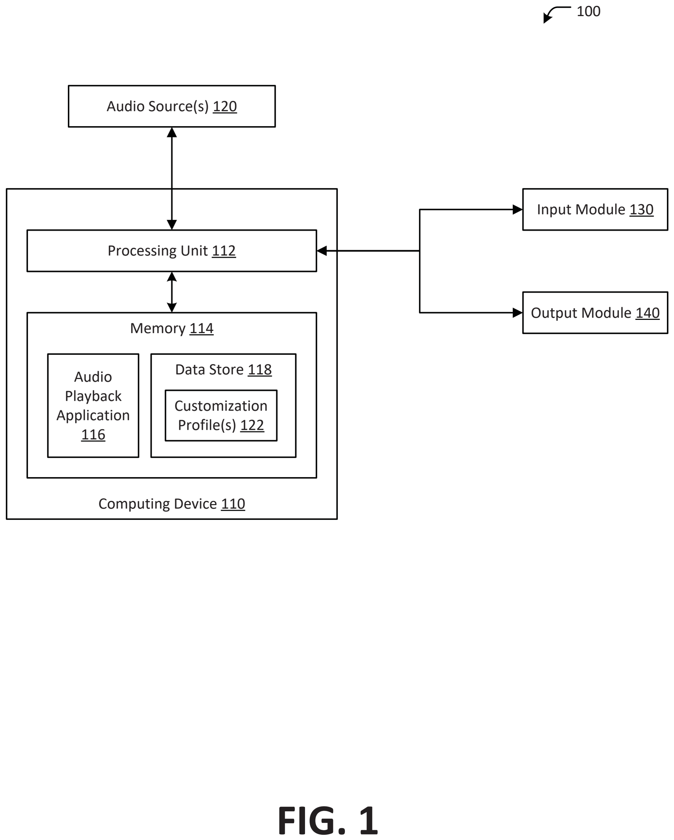

FIG. 1 illustrates a block diagram of an audio playback system configured to implement one or more aspects of the present disclosure. As shown, the audio playback system 100 includes, without limitation, a computing device 110, audio source(s) 120, input module 130, and output module 140. The computing device 110 includes, without limitation, a processing unit 112 and memory 114. The memory 114 includes, without limitation, an audio playback application 116 and a data store 118. The data store 118 includes, without limitation, customization profile(s) 122.

In operation, the computing device 110 executes the audio playback application 116 to control the playback of audio from one or more vehicle components or sources within or outside of the vehicle. In particular, the processing unit 112 executes audio playback application 116 and causes playback of audio on one or more output devices associated with audio playback system 100. The audio playback application 116 receives an audio source 120, such as a terrestrial or satellite radio signal, music or other content obtained from a streaming audio service, audio files stored on a storage device associated with a vehicle, or audio content streamed from another device, such as a Bluetooth device to which the computing device 110 is connected.

Audio playback application 116 also provides a karaoke experience for users in connection with an audio source 120 that is played by audio playback system 100. For example, audio playback application 116 receives an audio input from input module 130, such as a vocal input detected by a microphone associated with audio playback system 100. Audio playback application 116 plays back the audio input on an audio output device, such as one or more loudspeakers, along with the audio source 120. In some cases, audio playback application 116 plays back video content on displays within the vehicle or toggles interior or exterior lighting in addition to playing back the audio source 120 and audio input to enhance the karaoke experience.

The computing device 110 includes the processing unit 112 and the memory 114. In various embodiments, the computing device 110 is a device that includes one or more processing units 112, such as a system-on-a-chip (SoC). In various embodiments, the computing device 110 is a mobile computing device, such as a tablet computer, mobile phone, media player, and so forth that wirelessly connects to other devices in the vehicle. In some embodiments, the computing device 110 is a head unit included in a vehicle system. Additionally, or alternatively, the computing device 110 can be a detachable device that is mounted in a portion of a vehicle as part of an individual console. Generally, the computing device 110 is configured to coordinate the overall operation of the audio playback system 100. The embodiments disclosed herein contemplate any technically feasible system configured to implement the functionality of the audio playback system 100 via the computing device 110. The functionality and techniques of the audio playback system 100 are also applicable to other types of vehicles, including consumer vehicles, commercial trucks, airplanes, helicopters, spaceships, boats, submarines, and so forth.

The processing unit 112 can include one or more central processing units (CPUs), digital signal processing units (DSPs), microprocessors, application-specific integrated circuits (ASICs), neural processing units (NPUs), graphics processing units (GPUs), field-programmable gate arrays (FPGAs), and so forth. The processing unit 112 generally includes a programmable processor that executes program instructions to manipulate input data and generate outputs. In some embodiments, the processing unit 112 can include any number of processing cores, memories, and other modules for facilitating program execution.

The memory 114 includes a memory module or collection of memory modules. The memory 114 generally comprises storage chips such as random-access memory (RAM) chips that store application programs and data for processing by the processing unit 112. In various embodiments, the memory 114 includes non-volatile memory, such as optical drives, magnetic drives, flash drives, or other storage. The audio playback application 116 within the memory 114 is executed by the processing unit 112 to implement the overall functionality of the computing device 110 and, thus, coordinate the operation of the audio playback system 100 as a whole.

The audio playback application 116 processes audio sources 120 and/or audio inputs received from input module 130 to reproduce audio signals. In various embodiments, the audio playback application 116 plays back songs via output module 140 along with vocal inputs from one or more occupants or users of a vehicle. The vocal inputs are obtained via input module 130 to provide a karaoke experience. Additionally, audio playback application 116 applies effects to the audio source 120 and/or audio inputs from the input module 130 to enhance or alter the karaoke experience. For example, audio playback application 116 applies compression to an audio input obtained from a microphone. Compression includes reducing or compressing the audio input's dynamic range by reducing the volume of loud components of the audio input and amplifying quiet components of the audio input. Audio playback application 116 can also apply other effects, such as a reverb effect that is applied to the audio input to simulate acoustic reverberation. As another example audio playback application 116 applies an auto-tune effect, a distortion effect, or other effects that modify an audio input captured by a microphone. In some cases, audio playback application 116 modifies the audio input by selecting a playback volume of the audio input captured by a microphone. The playback volume is selected based upon the playback volume of the audio source 120 or a user-defined playback volume. The user-defined playback volume is selected via a user interface provided by the output generation module 138 and a user input obtained by the input processing module 136.

After applying one or more effects to the audio input, audio playback application 116 causes playback of the modified audio input using one or more output devices along with an audio source 120, such as a song, to provide a karaoke experience in which users can sing along with the audio source 120 while vocals of the users are played aback along with the audio source 120. In some implementations, audio playback application 116 further causes output module 140 to display visuals on one or more display devices, modifies the interior or exterior lighting to enhance the karaoke experience. The visuals or modifications to interior or exterior lighting can be rhythm based such that they are synchronized to the audio source 120.

The data store 118 is a portion of the memory 114 that stores various data locally, including customization profiles 122 (e.g., user profiles, device profiles, etc.) and other data (not shown), such as content items, data tables (e.g., a table mapping audio tones to events) and/or application data (e.g., secure application data, metadata, etc.) associated with the audio playback application 116. In various embodiments, the data store 118 can be included in volatile memory and can correspond to a section of nonvolatile memory. In some embodiments, the computing device 110 can sync data between the volatile memory and the nonvolatile memory so that copies of data are stored in both the volatile and nonvolatile memory. In some embodiments, the data store 118 stores downloaded audio files obtained from a network source or other remote source. The audio files can be played back via output module 140 by audio playback application 116.

The customization profile(s) 122 includes profiles specifying processing steps or effects that, when selected, are applied to an audio input such as a vocal input obtained via input module 130. A customization profile 122 can be selected by a user via a user input device provided within the vehicle or via a user input device associated with a different device that is in communication with computing device 110. A customization profile 122 defines which of one or more effects, such as compression, reverb, autotune, or other vocal effects, should be applied by audio playback application 116 to an audio input that is played back by the audio playback application 116 via output module 140. A customization profile 122 also specifies to what degree each of the effects should be applied to the audio input signal. A customization profile 122 can also specify lighting effects, such as strobe effects, rhythm-based lighting effects, or light dimming, that should be applied within a vehicle interior during a karaoke session. In some cases, a particular customization profile 122 is tied to a song that is retrieved and played back from data store 118. Additionally, a customization profile 122 can be tied to a seating location within a vehicle. When a vocal input received via input module 130 is detected as originating from a particular location within the vehicle based upon the location of a movable microphone within the vehicle or based upon inputs from other interior vehicle sensors, audio playback application 116 selects a customization profile 122 that is tied to the seating location.

The audio source(s) 120 includes one or more data sources that provide an audio signal for reproduction. The audio source 120 includes a prerecorded audio performance, such as a song. In various embodiments, the audio source 120 is included in a device within the vehicle, such as an entertainment subsystem included in the head unit of the vehicle, a rear-seat entertainment console, a device mounted in the vehicle, and so forth. In some embodiments, the audio source 120 is included in a mobile device, wearable device, and/or other portable device that connects to the audio playback application 116. Additionally, the audio source 120 can be remote to the vehicle. In such instances, the remote data source streams the audio source 120 to the computing device 110, whereupon the audio playback application 116 transmits the audio source 120 to an output device associated with output module 140 for reproduction.

The input module 130 includes one or more devices that perform measurements and/or acquire data related to certain subjects in an environment. In various embodiments, the input module 130 generates sensor data that is related to the user and/or objects in the environment that are not the user. In some embodiments, the input module 130 is coupled to and/or included within the computing device 110 and sends sensor data to the processing unit 112.

In various embodiments, the input module 130 includes audio sensors, such as built-in microphones and/or a microphone array that record sounds within the compartment of the vehicle. Built-in microphones are installed at fixed locations within the vehicle and are often integrated into or behind interior trim panels. Input module 130 also includes one or more microphones that are movable within the vehicle, such as a handheld microphone. A movable microphone can be connected to computing device 110 using a wired or wireless interface. In the case of a wireless connection between a movable microphone and computing device 110, the wireless protocol used should have a latency of approximately fifteen milliseconds or less. Input module 130 can also include vehicle occupant sensors or compartment sensors that detect the presence of occupants and/or their respective seating location. The vehicle occupant sensors include, for example, optical sensors, such as RGB cameras, infrared cameras, depth cameras, and/or camera arrays, which include two or more of such cameras that are oriented towards the seating area of the vehicle. Compartment sensors include, for example, pressure sensors integrated into seating locations in the vehicle that detect when an occupant is seated in a particular seating location in the vehicle. In some embodiments, the input module 130 includes touch sensors, position sensors (e.g., an accelerometer and/or an inertial measurement unit (IMU)), or other types of sensors that register the body position and/or movement of a user within the vehicle or of a movable microphone within the vehicle.

In some embodiments, the input module 130 includes physiology sensors, such as heart-rate monitors, electroencephalography (EEG) systems, radio sensors, thermal sensors, galvanic skin response sensors (e.g., sensors that measure change in electrical resistance of skin caused by emotional stress), contactless sensor systems, or magnetoencephalography (MEG) systems. Input module 130 also includes devices capable of receiving input, such as a keyboard, a mouse, a touch-sensitive screen, and other input devices for providing inputs to the computing device 110. In various embodiments, the input module 130 is associated with a specific console, such as personalized screens mounted to a portion of a seat, or console-specific input components.

Output module 140 includes one or more devices capable of providing output, such as a display screen or loudspeakers. In various embodiments, one or more of input module 130 or output module 140 is incorporated in the computing device 110 or is external to the computing device 110. In some embodiments, the computing device 110, input module 130, or output module 140 can be components of an IVI system or an entertainment subsystem included in a vehicle.

### Vehicle System

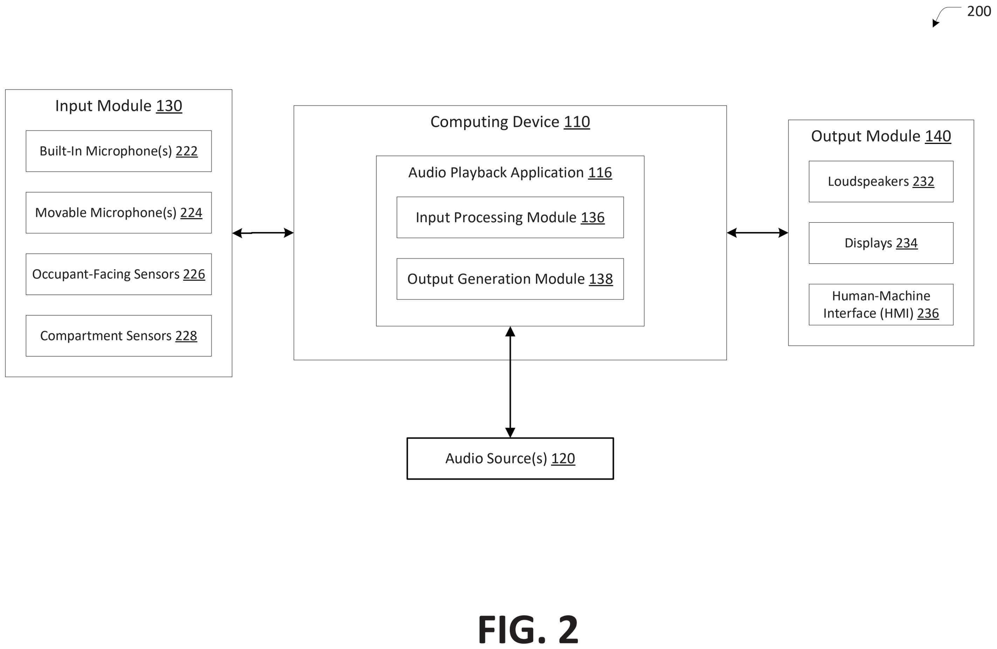

FIG. 2 illustrates an example IVI system 200 that includes the audio playback system 100 of Figure 1, according to various embodiments. As shown, the IVI system 200 includes, without limitation, an input module 130, computing device 110, and output module 140. The input module 130 includes, without limitation, one or more built-in microphones 222, a movable microphone 224, occupant-facing sensors 226, and compartment sensors 228. The computing device 110 includes, without limitation, the audio playback application 116. The output module 140 includes, without limitation, loudspeakers 232, displays 234, and a human-machine interface (HMI) 236. The audio playback application 116 includes, without limitation, an input processing module 136 and an output generation module 138.

In some embodiments, computing device 110 can be integrated into a head unit of the vehicle. A head unit is a component of the vehicle that is mounted at any location within a passenger compartment of the vehicle in any technically feasible fashion. In some embodiments, the head unit includes any number and type of instrumentation and applications and provides any number of input and output mechanisms. For example, the head unit enables users (e.g., the driver and/or passengers) to control the IVI system. The head unit supports any number of input and output data types and formats, as known in the art. For example, the head unit could include built-in Bluetooth for hands-free calling and/or audio streaming, USB connections, speech recognition, camera inputs via the input module 130, video outputs via the output module 140 for any number and type of displays 234, and any number of audio outputs. In general, any number of sensors, displays, receivers, transmitters, etc., can be integrated into the head unit, or can be implemented externally to the head unit. Additionally, computing device 110 can be located elsewhere in the vehicle, such as hidden behind interior trim panels in a manger that is not visible to passengers.

In operation, the audio playback application 116 receives an audio source 120 and causes one or more loudspeakers 232 associated with output module 140 to play back the audio source 120. The audio source 120 includes a song, radio station, or other audio source that can be played back or streamed by computing device 110. In one scenario, a user of IVI system 200 activates a karaoke mode of the audio playback application 116 via HMI 236 and selects an audio source 120. Accordingly, the audio playback application 116 then detects an audio input from movable microphone 224 of the input module 130. The audio input represents a vocal input obtained by the movable microphone 224. The audio playback application 116 modifies the audio input and causes the loudspeakers 232 of the output module 140 to play back the modified audio input in addition to the audio source 120. To modify the audio input captured by movable microphone 224, audio playback application 116 applies compression, reverb, autotune, or other effects to the audio input captured by movable microphone 224. By utilizing a movable microphone 224 rather than or in addition to one or more built-in microphones 222 within the vehicle, the fidelity and quality of the audio input received by audio playback application 116 is improved relative to utilizing only one or more built-in microphones 222 to capture vocal inputs of the user. Additionally, the microphone sensitivity utilized for the movable microphone 224 can be lowered to reduce the possibility of pickup of background noises that cause acoustic feedback while still capturing vocal inputs from close range to the movable microphone 224.

Audio playback application 116 also detects a location of the movable microphone 224 within the vehicle based on inputs received from input module 130. For example, audio playback application 116 detects a seating location within the vehicle based on sensor data from one or more built-in microphones 222, movable microphone 224, occupant-facing sensors 226 or compartment sensors 228. Audio playback application 116 can also detect a seating location associated with the movable microphone 224 by analyzing audio input from one or more built-in microphones 222 associated with the vehicle. For example, audio playback application 116 determines a seating location of a user providing input to movable microphone 224 based on a loudness of a respective audio inputs detected by the other one or more built-in microphones 222 located throughout the vehicle. In response to detecting a seating location, audio playback application 116 selects a customization profile 122 corresponding to the detected seating location within the vehicle. Audio playback application 116 can apply customized effects to the audio input that is tied to the seating location and defined by a customization profile 122. Additionally, audio playback application 116 can apply lighting effects using interior or exterior vehicle lighting that are customized depending upon the detected seating location that are defined by a customization profile 122.

The input module 130 includes multiple types of sensors, one or more built-in microphones 222, movable microphone 224, occupant-facing sensors 226, and compartment sensors 228. In some cases, input module 130 also includes vehicle sensors, such as outward-facing cameras, external microphones, accelerometers, etc. Occupant-facing sensors 226 include cameras or motion sensors that are oriented to detect the presence of occupants within the vehicle. In some cases, occupant-facing sensors 226 can also detect users based on facial recognition so that audio playback application 116 can identify a customization profile 122 corresponding to a user within the vehicle. Compartment sensors 228 include other types of sensors, such as pressure sensors, temperature sensors, or other types of sensors that also detect the presence of occupants within the vehicle. In various embodiments, the input module 130 provides a combination of sensor data to audio playback application 116, which can utilize inputs obtained by one or more built-in microphones 222 and movable microphone 224 as well as sensor data from occupant-facing sensors 226 and compartment sensors 228 to determine a seating location of the movable microphone 224 within the vehicle. Additionally, input module 130 provides audio inputs from one or more built-in microphones 222 and/or movable microphone 224 that can be played back using loudspeakers 232 within the vehicle when a karaoke mode is selected by a user within the vehicle.

The output module 140 includes multiple types of output devices, including loudspeakers 232, displays 234 and HMI 236. The output module 140 performs one or more actions in response to an output signal from computing device 110 or other subsystems within the vehicle. For example, the output module 140 receives an audio output from computing device 110, which can include multiple audio outputs that are mixed together by computing device 110. The output module 140 plays back the audio output using loudspeakers 232 within the vehicle. For example, audio playback application 116 mixes an audio source 120 together with an audio input detected by movable microphone 224 and transmits an audio output including both the audio source 120 and audio input to output module 140, which plays back the audio using loudspeakers 232. As another example, output module 140 receives other information from computing device 110 and causes the displays 234 or HMI 236 to display notifications, messages, alerts, or other information.

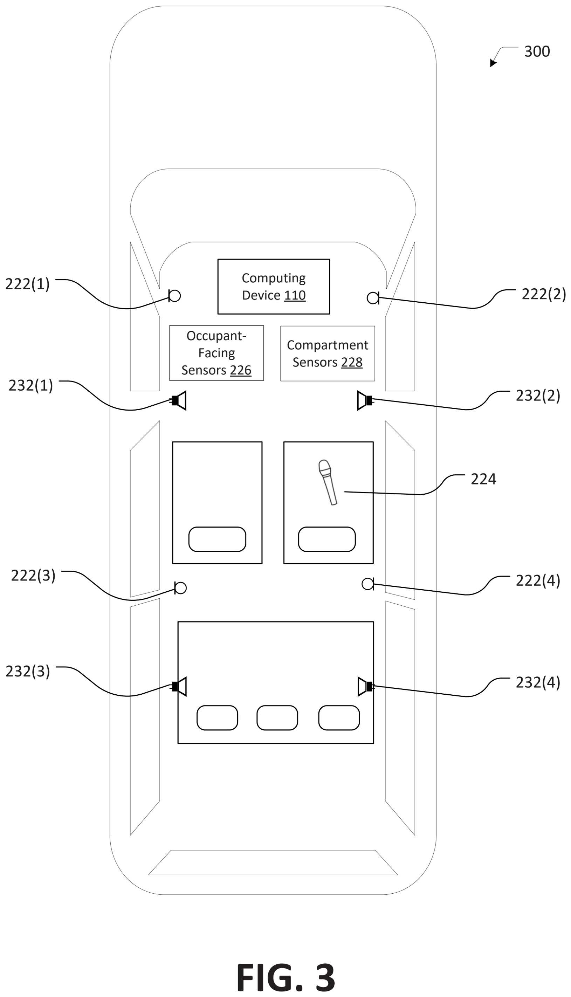

FIG. 3 illustrates an example vehicle 300 incorporating the IVI system 200 of FIG. 2, according to various embodiments. As shown, the vehicle 300 includes, without limitation, computing device 110, occupant-facing sensors 226, compartment sensors 228, one or more built-in microphones 222 (e.g., 222(1), 222(2), 222(3), 222(4)), movable microphone 224, and loudspeakers 232 (e.g., 232(1), 232 (2), 232 (3), 232 (4)). It should be appreciated that the vehicle 300 can also include HMI 236 and displays 234, but they are not depicted in the example vehicle 300 of FIG. 3.

In operation, a user of the vehicle 300 activates a karaoke mode within the audio playback application 116, which causes the computing device 110 to initiate playback of an audio source 120. The audio source 120 can be chosen by the user or identified by the audio playback application 116 based on a most recently played song, radio station, or randomly chosen by the audio playback application 116.

Additionally, computing device 110 detects an audio input from movable microphone 224 that is connected to computing device 110. The audio input includes vocal inputs from an occupant of the vehicle 300. Audio playback application 116 receives the audio input from movable microphone 224. In one embodiment, audio playback application 116 determines a seating location within the vehicle associated with the movable microphone 224. In one example, audio playback application 116 determines the seating location by identifying the movable microphone 224 using the occupant-facing sensors 226. In this example, audio playback application 116 analyzes images captured by occupant-facing sensors 226 to identify the movable microphone 224 within the images of the interior cabin that are captured by the occupant-facing sensors 226. In another example, audio playback application 116 determines a seating location associated with movable microphone 224 based on compartment sensors 228 in the vehicle 300, such as pressure sensors integrated within the seats of the vehicle 300. In this scenario, audio playback application 116 receives sensor data from compartment sensors 228 indicating which seats within the vehicle 300 are occupied. If a single passenger seat is occupied, audio playback application 116 can assume that the movable microphone 224 is associated with the occupied seat. If multiple seats are occupied, audio playback application 116 can rely upon a combination of data from compartment sensors 228 and occupant-facing sensors 226 to identify a seating location to associated with the movable microphone 224. In this example, the audio playback application 116 determines which seat to associate with the movable microphone 224 by identifying, based on an analysis of images captured by occupant-facing sensors 226, which users within the vehicle are singing or are holding the movable microphone 224.

In another scenario, audio playback application 116 relies upon information from one or more built-in microphones 222 within the vehicle to identify a seating location associated with the movable microphone 224. In this example, audio playback application 116 compares a volume of input signals obtained from each of the one or more built-in microphones 222 in the vehicle and determines that the seating location is the one nearest the microphone 222 with the loudest input signal. The audio playback application 116 determines that the middle seat in a row of seats is the seating location associated with the movable microphone 224 if the volumes input signals obtained by microphone 222(3) and 222(4), for example, are equal or within a threshold range of one another.

The audio playback application 116 can utilize a combination of inputs from one or more built-in microphones 222, occupant-facing sensors 226 and/or compartment sensors 228 to determine a seating location associated with the movable microphone 224. In the context of the disclosure, determining a seating location associated with the movable microphone 224 constitutes determining a seating location from which the movable microphone 224 is being used by an occupant of the vehicle.

Upon determining the seating location associated with the movable microphone 224, audio playback application 116 determines whether a customization profile 122 specifies customization of audio effects, interior lighting, or other aspects of the IVI system during playback of the audio source 120 and the captured audio input. The audio playback application 116 then modifies at least one property of the audio input received from movable microphone 224. As noted above, a reverb or autotune effect can be applied to the audio input. A customization profile 122 can specify the degree of each effect that should be applied to the audio input. As also noted above, the audio input can be compressed, and the customization profile 122 can further specify the amount or type of compression that should be applied to the audio input. After performing the modification of the audio input, audio playback application 116 causes playback of the audio input by the loudspeakers 232 along with playback of the audio source 120 to provide a karaoke experience to the occupants of the vehicle 300.

In some examples, audio playback application 116 can restrict or disable karaoke mode or aspects of the karaoke experience depending upon sensor data received from occupant-facing sensors 226, one or more built-in microphones 222, movable microphone 224, and/or compartment sensors 228. For example, if the audio playback application 116 determines that the only occupant of the vehicle is the driver, audio playback application 116 can restrict or disable a karaoke mode when the vehicle 300 is in motion. As another example, audio playback application 116 disables interior lighting customization when the vehicle is in motion to reduce driver distraction.

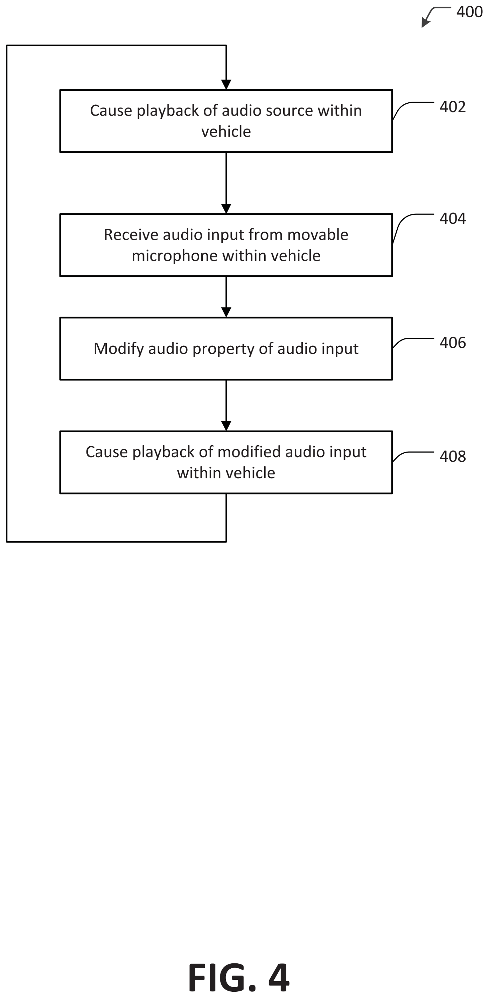

FIG. 4 illustrates a flow diagram of method steps for generating an audio output based upon an audio input captured by the IVI system 200, according to various embodiments. Although the method steps are described with respect to the systems of Figures 1-3, persons skilled in the art will understand that any system configured to perform the method steps, in any order, falls within the scope of the various embodiments.

As shown, the method 400 begins at step 402, where the IVI system 200 causes playback of an audio source 120. The audio source 120 is selected by a user or selected automatically by the IVI system 200 based on a previously played audio source 120. In some implementations, the user selects a karaoke mode provided by audio playback application 116 of the IVI system 200 and selects a song via a user interface provided by the IVI system 200.

At step 404, audio playback application 116 receives an audio input from a movable microphone 224 within the vehicle. The movable microphone 224 is connected to the computing device 110 of the IVI system 200 via a connection that minimizes latency. For example, a wired connection to computing device 110 such as an auxiliary or USB port coupled to the computing device 110 can be utilized to connect the movable microphone 224 to the computing device 110. As another example, the movable microphone 224 can be wirelessly connected to the computing device 110 using a wireless interface that has sufficiently low latency for capturing vocal inputs and replaying the vocal inputs using the loudspeakers 232.

At step 406, audio playback application 116 modifies one or more properties of the audio input captured by the movable microphone 224. For example, audio playback application 116 applies compression to an audio input obtained from a microphone. Compression includes reducing or compression the audio input's dynamic range by reducing the volume of loud components of the audio input and amplifying quiet components of the audio input. Audio playback application 116 can also apply other effects, such as a reverb effect that is applied to the audio input to simulate acoustic reverberation. As another example audio playback application 116 applies an auto-tune effect, a distortion effect, or other effects that modify an audio input, such as vocals captured by a microphone. After applying one or more effects to the audio input, audio playback application 116 causes playback of the modified audio input using one or more output devices along with an audio source 120, such as a song, to provide a karaoke experience in which users can sing along with the audio source 120 while vocals of the users are played aback along with the audio source 120. In some implementations, audio playback application 116 selects a playback volume of the captured audio input based on a user setting or the playback volume of the audio source 120.

At step 408, audio playback application 116 causes playback of the modified audio input using one or more output devices, such as loudspeakers 232 associated with output generation module 138. Audio playback application 116 plays back the modified audio input along with the audio source 120 to provide a karaoke experience in which users can sing along with the audio source 120 while vocals of the users captured by movable microphone 224 are played aback along with the audio source 120. In some implementations, audio playback application 116 further causes output module 140 to display visuals on one or more display devices, modifies the interior or exterior lighting to enhance the karaoke experience.

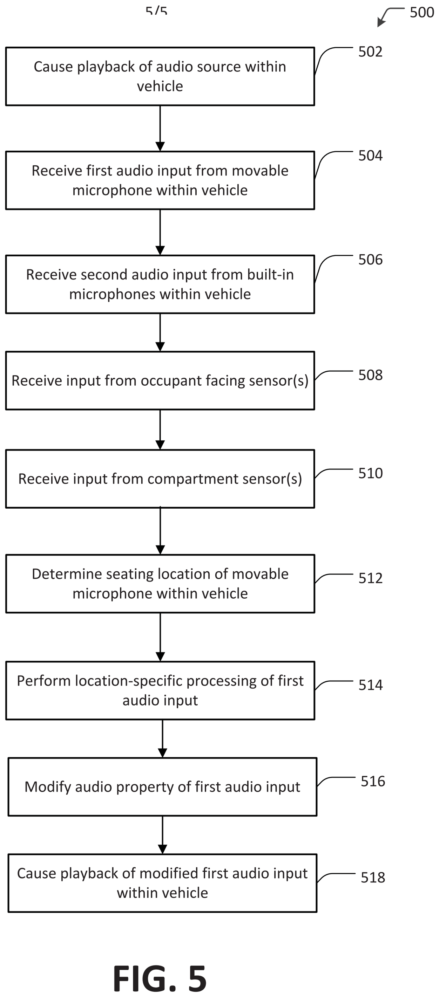

FIG. 5 illustrates a flow diagram of method steps for generating a location-specific audio output based upon an audio input captured by the IVI system 200, according to various embodiments. Although the method steps are described with respect to the systems of Figures 1- 3, persons skilled in the art will understand that any system configured to perform the method steps, in any order, falls within the scope of the various embodiments.

As shown, the method 500 begins at step 502, where the IVI system 200 causes playback of an audio source 120. The audio source 120 is selected by a user or selected automatically by the IVI system 200 based on a previously played audio source 120. In some implementations, the user selects a karaoke mode provided by audio playback application 116 of the IVI system 200 and selects a song via a user interface provided by the IVI system 200.

At step 504, audio playback application 116 receives a first audio input from a movable microphone 224 within the vehicle. The movable microphone 224 is connected to the computing device 110 of the IVI system 200 via a connection that minimizes latency. For example, a wired connection to computing device 110 such as an auxiliary or USB port coupled to the computing device 110 can be utilized to connect the movable microphone 224 to the computing device 110. As another example, the movable microphone 224 can be wirelessly connected to the computing device 110 using a wireless interface that has sufficiently low latency for capturing vocal inputs and replaying the vocal inputs using the loudspeakers 232.

At step 506, audio playback application 116 receives a second audio input from one or more built-in microphones 222 that are installed within the vehicle. In one scenario, audio playback application 116 relies upon information from one or more built-in microphones 222 within the vehicle to identify a seating location associated with the movable microphone 224. In this example, audio playback application 116 compares a volume of input signals obtained from each of the one or more built-in microphones 222 in the vehicle and determines that the seating location is the one nearest the microphone 222 with the loudest input signal volume. The audio playback application 116 determines that the middle seat in a row of seats is the seating location associated with the movable microphone 224 if the volumes input signals obtained one or more built-in microphones 222 on opposing sides of the vehicle are equal or within a threshold range of one another.

At step 508, audio playback application 116, receives one or more inputs from occupant-facing sensors 226 associated with a vehicle. For example, audio playback application 116 analyzes images captured by occupant-facing sensors 226 to identify the movable microphone 224 within the images of the interior cabin that are captured by the occupant-facing sensors 226.

At step 510, audio playback application 116, receives one or more inputs from occupant-facing sensors 226 associated with a vehicle. Compartment sensors 228 in the vehicle include pressure sensors integrated within the seats of the vehicle or other sensors that detect the presence of a user on a seat within the vehicle. In this scenario, audio playback application 116 receives sensor data from compartment sensors 228 indicating which seats within the vehicle 300 are occupied. If a single passenger seat is occupied, audio playback application 116 can assume that the movable microphone 224 is associated with the occupied seat. If multiple seats are occupied, audio playback application 116 can rely upon a combination of data from one or more built-in microphones 222, compartment sensors 228 and occupant-facing sensors 226 to identify a seating location to associated with the movable microphone 224. In this example, the audio playback application 116 determines which seat to associate with the movable microphone 224 by identifying, based on an analysis of images captured by occupant-facing sensors 226, which users within the vehicle are singing or are holding the movable microphone 224.

At step 512, audio playback application 116 determines a seating location associated with movable microphone 224 based upon inputs received from the one or more built-in microphones 222, occupant-facing sensors 226, and compartment sensors 228. As noted above, the audio playback application 116 utilizes a combination of inputs from the one or more built-in microphones 222, occupant-facing sensors 226 and/or compartment sensors 228 to determine a seating location associated with the movable microphone 224. In the context of the disclosure, determining a seating location associated with the movable microphone 224 constitutes determining a seating location from which the movable microphone 224 is being used by an occupant of the vehicle.

At step 514, audio playback application 116 selects a customization profile 122 corresponding to the detected seating location within the vehicle. Audio playback application 116 can apply customized effects to the first audio input that is tied to the seating location and defined by a customization profile 122. A customization profile 122 defines which of one or more effects, such as compression, reverb, autotune, or other vocal effects, that should be applied by audio playback application 116 to the first audio input that is played back by the audio playback application 116 via output module 140. A customization profile(s) 122 also specifies to what degree each of the effects should be applied to the input signal.

At step 516, audio playback application 116 modifies one or more audio properties of the first audio input as specified by the customization profile 122. The audio playback application 116 applies one or more of a reverb, autotune, compression, or other vocal effects specified by the customization profile 122 to the first audio input received from movable microphone 224. At step 518, after performing the modification of the first audio input, audio playback application 116 causes playback of the modified audio input by the loudspeakers 232 along with playback of the audio source 120.

In sum, an IVI system causes playback of an audio source, such as a song or instrumental track from a local or remote source, along with an audio input, such as a vocal input from an occupant of the vehicle that is captured using a movable microphone. The audio source is played back using an audio output device associated with the IVI system. The movable microphone can include a handheld microphone that is in communication with the IVI system. In some instances, the audio input captured by the movable microphone is augmented with audio input captured by the vehicle's built-in microphones or a microphone array. The audio input is also played back using one or more output devices associated with the IVI system. The IVI system can perform one or more processing operations on the audio input, such as compression or reverberation. In some instances, the IVI system can determine a seating location with which the audio input is associated and perform processing operations that are customized or specific to the seating location or a user profile based upon the detected location of the movable microphone.

At least one technical advantage of the disclosed techniques relative to the prior art is that, with the disclosed techniques, utilizing a movable microphone, such as a handheld microphone, to capture vocal or audio inputs within the vehicle improves the quality and fidelity of the audio captured within a vehicle's interior cabin. Additionally, a lower microphone sensitivity can be utilized relative to implementations relying on immovable or built-in microphones, which reduces the amount of background noise captured by the movable microphone, improves the quality of processing steps taken to compress or add effects to the audio, and/or reduces acoustic feedback. Finally, the disclosed techniques support personalization of a karaoke experience provided by the IVI system based on the seating location of the occupant. These technical advantages provide one or more technological advancements over prior art approaches.
1. In some embodiments, a computer-implemented method comprises causing playback of an audio source by at least one speaker within a vehicle, detecting a first audio input using a microphone that is movable within the vehicle, modifying at least one audio property of the first audio input to generate a modified first audio input, and causing playback of the modified first audio input by the at least one speaker within the vehicle.
2. The computer-implemented method of clause 1, further comprising determining a location of the microphone within the vehicle, wherein modifying the at least one audio property of the first audio input is based on the location of the microphone within the vehicle.
3. The computer-implemented method of clauses 1 or 2, wherein determining the location of the microphone within the vehicle is based on sensor data received from at least one of a camera or a motion sensor.
4. The computer-implemented method of any of clauses 1-3, wherein determining the location of the microphone within the vehicle is based on sensor data a compartment sensor.
5. The computer-implemented method of any of clauses 1-4, wherein determining the location of the microphone within the vehicle is based on a second audio input captured by a fixed microphone within the vehicle.
6. The computer-implemented method of any of clauses 1-5, wherein modifying the at least one audio property of the first audio input comprises compressing the first audio input to reduce a dynamic range of the first audio input.
7. The computer-implemented method of any of clauses 1-6, wherein modifying the at least one audio property of the first audio input comprises applying reverb or an autotune effect to the first audio input.
8. The computer-implemented method of any of clauses 1-7, further comprising detecting a second audio input using a fixed microphone integrated into the vehicle, modifying at least one audio property of the second audio input to generate a modified second audio input, and causing playback of the modified second audio input by the at least one speaker within the vehicle.
9. The computer-implemented method of any of clauses 1-8, wherein a first microphone sensitivity associated with the microphone that is movable within the vehicle is lower than a second microphone sensitivity associated with the fixed microphone.
10. The computer-implemented method of any of clauses 1-9, wherein the microphone that is movable within the vehicle comprises a handheld microphone.
11. In some embodiments, one or more non-transitory computer-readable media store instructions that, when executed by one or more processors, cause the one or more processors to perform the steps of causing playback of an audio source by at least one speaker within a vehicle, detecting a first audio input using a microphone that is movable within the vehicle, modifying at least one audio property of the first audio input to generate a modified first audio input, and causing playback of the modified first audio input by the at least one speaker within the vehicle.
12. The one or more non-transitory computer-readable media of clause 11, wherein the steps further comprise determining a location of the microphone within the vehicle, wherein modifying the at least one audio property of the first audio input is based on the location of the microphone within the vehicle.
13. The one or more non-transitory computer-readable media of clauses 11 or 12, wherein determining the location of the microphone within the vehicle is based on sensor data received from at least one of a camera or a motion sensor.
14. The one or more non-transitory computer-readable media of any of clauses 11-13, wherein determining the location of the microphone within the vehicle is based on sensor data a compartment sensor
15. The one or more non-transitory computer-readable media of any of clauses 11-14, wherein determining the location of the microphone within the vehicle is based on a second audio input captured by a fixed microphone within the vehicle.
16. The one or more non-transitory computer-readable media of any of clauses 11-15, wherein modifying the at least one audio property of the first audio input comprises compressing the first audio input to reduce a dynamic range of the first audio input.
17. The one or more non-transitory computer-readable media of any of clauses 11-16, wherein modifying the at least one audio property of the first audio input comprises applying a reverb or autotune effect to the first audio input.
18. In some embodiments, a system comprises a microphone movable within a vehicle, at least one speaker, a memory storing an audio playback application, and a processor coupled to the memory that executes the audio playback application by performing the steps of causing playback of an audio source by the at least one speaker, detecting a first audio input using the microphone, modifying at least one audio property of the first audio input to generate a modified first audio input, and causing playback of the modified first audio input by the at least one speaker within the vehicle.
19. The system of clause 18, wherein the steps further comprise determining a location of the microphone within the vehicle, wherein modifying the at least one audio property of the first audio input is based on the location of the microphone within the vehicle.
20. The system of clauses 18 or 19, wherein the microphone comprises a wireless microphone.

Any and all combinations of any of the claim elements recited in any of the claims and/or any elements described in this application, in any fashion, fall within the contemplated scope of the present invention and protection.

The descriptions of the various embodiments have been presented for purposes of illustration but are not intended to be exhaustive or limited to the embodiments disclosed. Many modifications and variations will be apparent to those of ordinary skill in the art without departing from the scope and spirit of the described embodiments.

Aspects of the present embodiments can be embodied as a system, method or computer program product. Accordingly, aspects of the present disclosure can take the form of an entirely hardware embodiment, an entirely software embodiment (including firmware, resident software, micro-code, etc.) or an embodiment combining software and hardware aspects that can all generally be referred to herein as a "module," a "system," or a "computer." In addition, any hardware and/or software technique, process, function, component, engine, module, or system described in the present disclosure can be implemented as a circuit or set of circuits. Furthermore, aspects of the present disclosure can take the form of a computer program product embodied in one or more computer readable medium(s) having computer readable program code embodied thereon.

Any combination of one or more computer readable medium(s) can be utilized. The computer readable medium can be a computer readable signal medium or a computer readable storage medium. A computer readable storage medium can be, for example, but not limited to, an electronic, magnetic, optical, electromagnetic, infrared, or semiconductor system, apparatus, or device, or any suitable combination of the foregoing. More specific examples (a non-exhaustive list) of the computer readable storage medium would include the following: an electrical connection having one or more wires, a portable computer diskette, a hard disk, a random access memory (RAM), a read-only memory (ROM), an erasable programmable read-only memory (EPROM or Flash memory), an optical fiber, a portable compact disc read-only memory (CD-ROM), an optical storage device, a magnetic storage device, or any suitable combination of the foregoing. In the context of this document, a computer readable storage medium can be any tangible medium that can contain or store a program for use by or in connection with an instruction execution system, apparatus, or device.

Aspects of the present disclosure are described above with reference to flowchart illustrations and/or block diagrams of methods, apparatus (systems) and computer program products according to embodiments of the disclosure. It will be understood that each block of the flowchart illustrations and/or block diagrams, and combinations of blocks in the flowchart illustrations and/or block diagrams, can be implemented by computer program instructions. These computer program instructions can be provided to a processor of a general-purpose computer, special purpose computer, or other programmable data processing apparatus to produce a machine. The instructions, when executed via the processor of the computer or other programmable data processing apparatus, enable the implementation of the functions/acts specified in the flowchart and/or block diagram block or blocks. Such processors can be, without limitation, general purpose processors, special-purpose processors, application-specific processors, or field-programmable gate arrays.

The flowchart and block diagrams in the figures illustrate the architecture, functionality, and operation of possible implementations of systems, methods and computer program products according to various embodiments of the present disclosure. In this regard, each block in the flowchart or block diagrams can represent a module, segment, or portion of code, which comprises one or more executable instructions for implementing the specified logical function(s). It should also be noted that, in some alternative implementations, the functions noted in the block can occur out of the order noted in the figures. For example, two blocks shown in succession may, in fact, be executed substantially concurrently, or the blocks can sometimes be executed in the reverse order, depending upon the functionality involved. It will also be noted that each block of the block diagrams and/or flowchart illustration, and combinations of blocks in the block diagrams and/or flowchart illustration, can be implemented by special purpose hardware-based systems that perform the specified functions or acts, or combinations of special purpose hardware and computer instructions.

While the preceding is directed to embodiments of the present disclosure, other and further embodiments of the disclosure can be devised without departing from the basic scope thereof, and the scope thereof is determined by the claims that follow.

## Claims

1. A computer-implemented method comprising:
causing playback of an audio source by at least one speaker within a vehicle;
detecting a first audio input using a microphone that is movable within the vehicle;
modifying at least one audio property of the first audio input to generate a modified first audio input; and
causing playback of the modified first audio input by the at least one speaker within the vehicle.

2. The computer-implemented method of claim 1, further comprising:
determining a location of the microphone within the vehicle, wherein modifying the at least one audio property of the first audio input is based on the location of the microphone within the vehicle.

3. The computer-implemented method of claim 1 or 2, wherein determining the location of the microphone within the vehicle is based on sensor data received from at least one of a camera or a motion sensor.

4. The computer-implemented method of any of claims 1 to 3, wherein determining the location of the microphone within the vehicle is based on sensor data a compartment sensor.

5. The computer-implemented method of any of claims 1 to 4, wherein determining the location of the microphone within the vehicle is based on a second audio input captured by a fixed microphone within the vehicle.

6. The computer-implemented method of any of claims 1 to 5, wherein modifying the at least one audio property of the first audio input comprises compressing the first audio input to reduce a dynamic range of the first audio input.

7. The computer-implemented method of any of claims 1 to 6, wherein modifying the at least one audio property of the first audio input comprises applying reverb or an autotune effect to the first audio input.

8. The computer-implemented method of any of claims 1 to 7, further comprising:
detecting a second audio input using a fixed microphone integrated into the vehicle;
modifying at least one audio property of the second audio input to generate a modified second audio input; and
causing playback of the modified second audio input by the at least one speaker within the vehicle.

9. The computer-implemented method of any of claims 1 to 8, wherein a first microphone sensitivity associated with the microphone that is movable within the vehicle is lower than a second microphone sensitivity associated with the fixed microphone.

10. The computer-implemented method of any of claims 1 to 9, wherein the microphone that is movable within the vehicle comprises a handheld microphone.

11. One or more non-transitory computer-readable media storing instructions that, when executed by one or more processors, cause the one or more processors to perform the steps of the method of any of claims 1 to 10.

12. The one or more non-transitory computer-readable media of claim 11, wherein the steps further comprise:
determining a location of the microphone within the vehicle, wherein modifying the at least one audio property of the first audio input is based on the location of the microphone within the vehicle.

13. A system comprising:
a microphone movable within a vehicle;
at least one speaker;
a memory storing an audio playback application; and
a processor coupled to the memory that executes the audio playback application by performing the steps of:
causing playback of an audio source by the at least one speaker;
detecting a first audio input using the microphone;
modifying at least one audio property of the first audio input to generate a modified first audio input; and
causing playback of the modified first audio input by the at least one speaker within the vehicle.

14. The system of claim 13, wherein the steps further comprise:
determining a location of the microphone within the vehicle, wherein modifying the at least one audio property of the first audio input is based on the location of the microphone within the vehicle.

15. The system of claim 13 or 14, wherein the microphone comprises a wireless microphone.
